# EUROPEAN PATENT SPECIFICATION

(11) **EP 0 723 138 B1**
(45) Date of publication and mention of the grant of the patent: **30.05.2001**
(21) Application number: 96300389.2
(22) Date of filing: 19.01.1996
(51) Int. Cl.: G01D 15/22

(54) **Printing apparatus**
Aufzeichnungsapparat
Appareil d'impression

(30) Priority: 20.01.1995 GB 9501171
(43) Date of publication of application: 24.07.1996
(73) Proprietor: ABB Instrumentation Limited, St Neots Cambridgeshire PE19 3EU (GB)
(72) Inventor: Claydon, David J., Sandy, Bedfordshire, LU1 3AE (GB)
(74) Representative: Moir, Michael Christopher

(56) References cited:
- EP-A- 0 442 484
- DE-A- 3 226 730
- US-A- 4 748 516

## Description

This invention relates to printing apparatus and in particular to apparatus having a printing head which is movable across a printing track. One important example of such printing apparatus is a chart recorder.

It is often the case that proper operation of a chart recorder demands very careful control over the separation between the printing head and the paper- or other print medium supported on a platen. The problem is compounded in situations where the platen forms part of a paper cassette removable from the chart recorder.

To address this problem, it has previously been proposed that the printing head in a chart recorder should be supported on a print track which extends transversely of the platen. The ends of the track are mounted in lever arms which are each biased into engagement with the platen. In this way, despite variations in location of the platen with respect to the chassis of the chart recorder, it can be assured that the two ends of the printing track are in correct alignment with the platen.

A difficulty has been identified with this arrangement. If, for example, it is desired to increase the width of the platen from the conventional 100mm to perhaps 250mm, it is found that variations in the straightness of the printing track (despite the correct location at both ends of the track) can result in an unacceptable variation in the separation of the printing head from the paper. Increasing the rigidity of the printing track, in order to reduce such variations, is not regarded as a satisfactory solution, because of the cost and weight implications.

It is accordingly an object of the--present-invention to provide an improved chart recorder or other printing apparatus in which optimal separation of the printing head can be assured despite possible variations in the straightness of an extended printing track.

EP-A-442484 discloses a printer in which a print carriage is arranged to be guided by a sheet guide member in contact with paper to be printed.

The invention is set out in the claims, to which reference should be made.

In a preferred embodiment the print track comprises first and second parallel track rods, the second rod being movable relative to the first rod.

Preferably the rods are supported on a lever, the second rod being movable in an elongate slot in said lever, and biased by the biasing means.

Preferably said biasing means urges said printing head towards said paper, and in the preferred embodiment said biasing means comprises a hairspring.

In a preferred embodiment abutment comprises a sledge member, and is of a low friction material.

A further aspect of the present invention consists in printing apparatus comprising a platen, a printing track including two parallel rods one moveable transversely of itself relative to the other, a printing head mounted on the track and having an abutment serving to define the separation between the printing head and the paper on the platen, and biasing means for biasing the moveable rod to maintain engagement between the abutment and the paper.
The invention will now be described by way of example with reference to the accompanying drawings in which:-
Figure 1 is a side view illustrating known chart recorder apparatus;
Figure 2 is a plan view of the known apparatus of Figure 1, with certain parts omitted for clarity; and
Figure 3 is a isometric view illustrating a modification, in accordance with this invention, to the chart recorder apparatus of Figures 1 and 2.

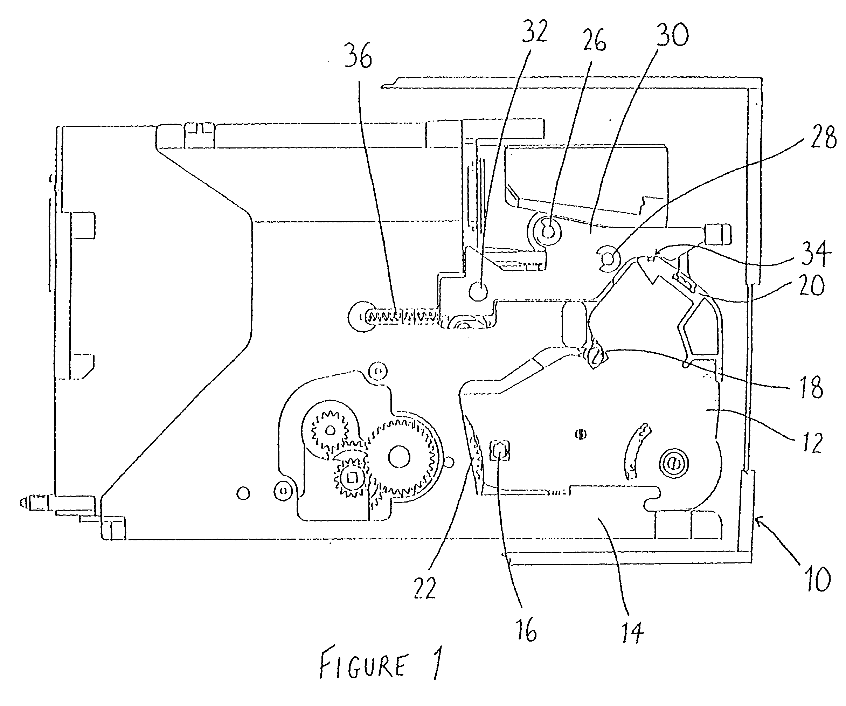

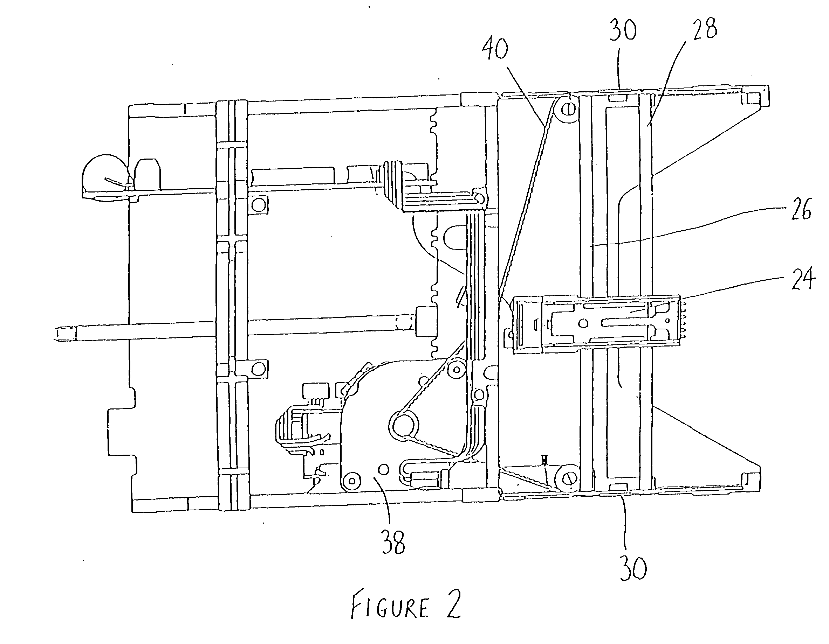

Referring initially to Figures 1 and 2, a chart recorder (10) has a paper cassette (12) removably supported in a chassis (14). The cassette (12) has paper take-up and supply spools mounted on axles (16) and (18) and has a platen (20).

The chart recorder chassis carries drive gears (22) which are engageable with the cassette for the proper transport of paper over the platen (20). A printing head (24) is mounted in the chassis by means of track rods (26) and (28) which extend transversely. The ends of the track rods are carried in a cranked lever arm (30) which is mounted in the chassis for rotation about a pivot (32). The lever arm (30) has a nose (34) and a helical spring (36) serves to pivot the lever arm (30) about the pivot point (32) so as to bring the nose (34) into engagement with the platen (20) of the cassette.

A drive motor (38) and drive belt (40) serve to move the printing head along the track rods with the floating action of the two levers (30) serving to control the separation between the printing head and the platen, irrespective of possible variations in position of the print cassette.

It is found that the described arrangement works well for paper charts of conventional width. A difficulty has been found to arise with wider chart paper, possibly of 250mm.

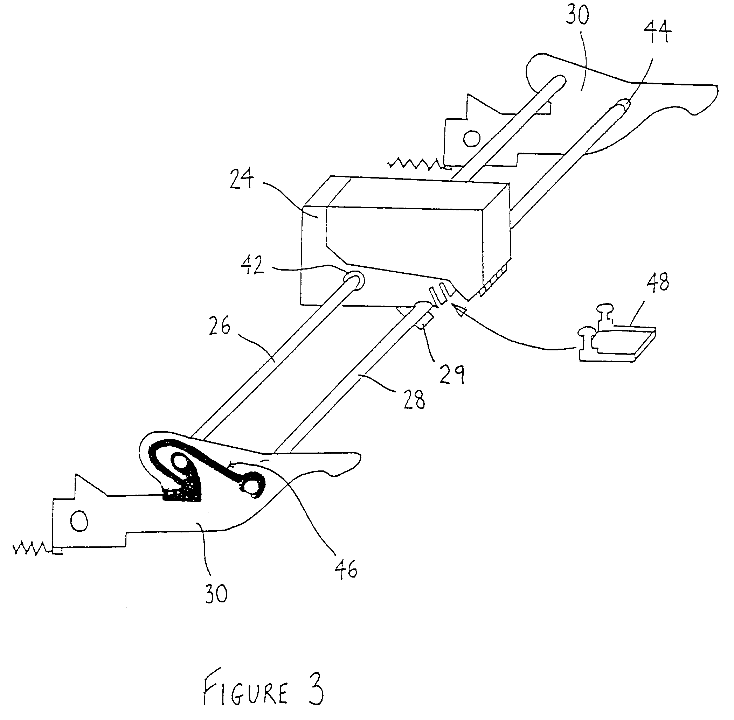

Turning to Figure 3, there is shown a modification. The track rod (28) extends, as before, between the two crank levers (30). The printing head (24) has an aperture (42) through which the track rod (26) passes. The forward portion of the printhead rests on the second track rod (28). This track rod, however, is not fixed in the lever arms (30). Instead, the lever arms are each provided with an elongated slot (44) enabling movement of the track rod (28). In each lever (30), a hairspring (46) serves to urge the track rod (28) towards the bottom of the elongated slots. With the forward end of the printhead (24) resting on the track rod (28), the effect of this biasing is to urge the forward and working end of the printhead towards the paper. If the effect of gravity is not sufficient to maintain the forward end of the print-head in contact with the track rod a small spring clip 29 may be employed.

To determine the separation between the printhead (or at least the print nibs within the printhead) and the paper, an abutment in the form of a sledge (48) is added to the underside of the printhead. This sledge is formed of low friction material so as to add insignificant resistance to movement of the printhead along the track.

In this manner, it is ensured that even where the track rods are not completely straight, the optimal separation of the print nibs and paper will be maintained. It should be understood that a typical movement between printing and non-printing orientation of a print nib is 0.5mm or less. Accordingly, the tolerances in a track rod of 250mm length would - in the absence of this invention - be extremely tight.

It should be understood that this invention has been described by way of example only and a wide variety of modifications are possible without departing from the scope of the invention. Thus, for example, the described sledge could be replaced by an abutment which was integral with the printhead. Similarly, other means can be employed for biasing the printhead to ensure engagement between the abutment and the paper. Thus, the track rod (28) could remain fixed in the same manner as the track rod (26) with a degree of floating being introduced between the printhead and the track rod (28). In a further modification, a single track rod is employed with a torsional spring arrangement biasing the printhead for rotation about the track rod in the sense to bring the printhead into closer engagement with the paper.

Each feature disclosed in the specification (which term includes the claims) and/or shown in the drawings may be incorporated in the invention independently of other disclosed and/or illustrated features.

## Claims

1. Printing apparatus comprising a chassis (14); a platen (20) mounted in the chassis; a printing track (26,28) floatingly supported in the chassis and biased towards the platen; a printing head (24) mounted for movement along said track and having an abutment (48) serving to define the separation between the printing head and the paper on the platen and biasing means (46) for maintaining engagement between the abutment and said paper.

2. Printing apparatus according to Claim 1 wherein said print track comprises first and second parallel track rods, the second rod being movable relative to the first rod.

3. Printing apparatus according to Claim 2 wherein said rods are supported on a lever, the second rod being movable in an elongate slot in said lever.

4. Printing apparatus according to Claim 2 wherein the biasing means biases said second rod.

5. Printing apparatus according to Claim 1 wherein said biasing means urges said printing head towards said paper.

6. Printing apparatus according to Claim 2 wherein said biasing means comprises a hairspring.

7. Printing apparatus according to Claim 1 wherein said abutment comprises a sledge member.

8. Printing apparatus according to Claim 7 wherein said sledge member is of low friction material.

9. Printing apparatus according to any preceding claim comprising a chart recorder wherein the platen forms part of a paper cassette removable from the chart recorder.

10. A chart recorder comprising printing apparatus according to any preceding claim capable of printing chart paper of 250 millimetres width.

## Patentansprüche

1. Druckvorrichtung umfassend ein Chassis (14); eine Schreibwalze (20), die in das Chassis eingebaut ist; eine Druckspur (26, 28), die veränderlich in dem Chassis gehalten ist und in Richtung auf die Schreibwalze vorgespannt ist; einen Druckkopf (24), der für eine Bewegung entlang der Spur gehaltert ist und eine Stoßfläche (48) aufweist, die dazu dient, um den Abstand zwischen dem Druckkopf und dem Papier auf der Schreibwalze zu definieren, sowie ein vorspannendes Mittel (46), um einen Eingriff zwischen der Stoßfläche und dem Papier aufrecht zu erhalten.

2. Druckvorrichtung nach Anspruch 1, bei der die Druckspur erste und zweite parallele Spurstangen umfasst, wobei die zweite Spurstange relativ zu der ersten Stange bewegbar ist.

3. Druckvorrichtung nach Anspruch 2, bei der die Stangen auf einem Hebel gelagert sind, wobei die zweite Stange in einem Längsschlitz in dem Hebel bewegbar ist.

4. Druckvorrichtung nach Anspruch 2, bei der das vorspannende Mittel die zweite Stange vorspannt.

5. Druckvorrichtung nach Anspruch 1, bei der das vorspannende Mittel den Druckkopf gegen das Papier drückt.

6. Druckvorrichtung nach Anspruch 2, bei der das vorspannende Mittel eine Spiralfeder bzw. Unruhefeder umfasst.

7. Druckvorrichtung nach Anspruch 1, bei der die Stoßfläche ein Schlittenelement umfasst.

8. Druckvorrichtung nach Anspruch 7, bei der das Schlittenelement aus einem friktionsarmen Material besteht.

9. Druckvorrichtung nach einem der vorhergehenden Ansprüche, mit einem Chartrecorder bzw. Bandschreiber, wobei die Schreibwalze einen Teil einer Papierkassette ausbildet, die aus dem Chartrecorder bzw. Bandschreiber herausnehmbar ist.

10. Chartrecorder bzw. Bandschreiber, umfassend eine Druckvorrichtung nach einem der vorhergehenden Ansprüche, welcher in der Lage ist, ein Chartpapier mit einer Breite von 250 mm zu bedrucken.

## Revendications

1. Dispositif d'impression comprenant un châssis (14); un rouleau (20) monté dans le châssis; un parcours d'impression (26, 28) supporté d'une manière flottante dans le châssis et poussé vers le rouleau; une tête d'impression (24) montée pour se déplacer le long dudit parcours et ayant une butée (48) servant à définir la séparation entre la tête d'impression et le papier présent sur le rouleau et un moyen de sollicitation (46) pour maintenir le contact entre la butée et ledit papier.

2. Dispositif d'impression selon la revendication 1, dans lequel ledit parcours d'impression comporte une première et une deuxième tiges de parcours parallèles, la deuxième tige étant mobile par rapport à la première tige.

3. Dispositif d'impression selon la revendication 2, dans lequel lesdites tiges sont supportées par un levier, la deuxième tige étant mobile dans une fente allongée dudit levier.

4. Dispositif d'impression selon la revendication 2, dans lequel le moyen de sollicitation pousse ladite deuxième tige.

5. Dispositif d'impression selon la revendication 1, dans lequel ledit moyen de sollicitation pousse ladite tête d'impression vers ledit papier.

6. Dispositif d'impression selon la revendication 2, dans lequel ledit moyen de sollicitation est constitué par un ressort en spirale.

7. Dispositif d'impression selon la revendication 1, dans lequel ladite butée comporte un élément en forme de traîneau.

8. Dispositif d'impression selon la revendication 7, dans lequel ledit élément en forme de traîneau est en matière à coefficient de frottement réduit.

9. Dispositif d'impression selon l'une quelconque des revendications précédentes, comportant un enregistreur graphique dans lequel le rouleau fait partie d'une cassette de papier pouvant être retirée de 1' enregistreur graphique.

10. Enregistreur graphique comportant un dispositif d'impression selon l'une quelconque des revendications précédentes, apte à imprimer du papier de tracé de graphiques de 250 millimètres de largeur.
